# EUROPEAN PATENT APPLICATION

(11) **EP 4 376 438 A1**
(43) Date of publication of application: **29.05.2024**
(21) Application number: 23170011.3
(22) Date of filing: 26.04.2023
(51) Int. Cl.: H04R 1/10, H04R 5/033, G02C 11/00

(54) **BINDER FOR BLUETOOTH EARPHONE**

(30) Priority: 25.11.2022 TW 111212986 U
(71) Applicant: Cotron Corporation, Taipei City 111 (TW)
(72) Inventor: YANG, Bill, 111 Taipei City (TW)
(74) Representative: Becker, Eberhard

(57) **Abstract**

A binder (100,200,300,400) for a bluetooth earphone (50, 60) has a first sleeve part (110,210,310,410) and a second sleeve part (120,220,320,420) connected to each other. The first sleeve part (110,210,310,410) is configured to cover at least a part of the bluetooth earphone (50, 60). The second sleeve part (120,220,320,420) is configured to cover at least a part of an article (70).

## Description

### BACKGROUND

### Technical Field

The disclosure relates to a binder, and more particularly, to a binder for a bluetooth earphone.

### Description of Related Art

With the continuous advancement of technology, personal electronic products are all moving towards a trend of light weight and miniaturization. Smartphones, tablet computers, or notebook computers have become indispensable to people's daily life. A bluetooth earphone may provide a listener with sound transmission, so that a user may clearly hear and understand the sound content. However, how to provide a stable wearing method is also a topic worthy of continuous innovation.

### SUMMARY

The disclosure provides a binder for a bluetooth earphone, which may reliably and conveniently combine the bluetooth earphone with other articles.

A binder for a bluetooth earphone in the disclosure has a first sleeve part and a second sleeve part connected to each other. The first sleeve part is configured to cover at least a part of the bluetooth earphone. The second sleeve part is configured to cover at least a part of an article.

In an embodiment of the disclosure, the first sleeve part is configured to cover an earphone clip rod of the bluetooth earphone.

In an embodiment of the disclosure, the article is a pair of glasses. The second sleeve part is configured to cover a temple of the glasses.

In an embodiment of the disclosure, the first sleeve part is configured to cover a body of the bluetooth earphone.

In an embodiment of the disclosure, the first sleeve part exposes an operation region of the bluetooth earphone.

In an embodiment of the disclosure, the first sleeve part and the second sleeve part are integrally formed, and a longitudinal direction of the first sleeve part is parallel to a longitudinal direction of the second sleeve part.

In an embodiment of the disclosure, the first sleeve part is combined with the second sleeve part, and the first sleeve part moves and rotates relative to the second sleeve part.

In an embodiment of the disclosure, the binder for the bluetooth earphone further has a nape hanger connected to the first sleeve part and the second sleeve part. The article is another bluetooth earphone.

In an embodiment of the disclosure, an aperture of the first sleeve part is different from an aperture of the second sleeve part.

In an embodiment of the disclosure, the binder for the bluetooth earphone further has a back-head hanger connected to the first sleeve part and the second sleeve part. The article is another bluetooth earphone.

Based on the above, in the binder for the bluetooth earphone in the disclosure, the two sleeve parts may respectively cover the bluetooth earphone and another article, and may firmly combine the bluetooth earphone with the another article.

### BRIEF DESCRIPTION OF THE DRAWINGS

FIG. 1A is a schematic view of a binder for a bluetooth earphone according to an embodiment of the disclosure.
FIG. 1B is a cross-sectional view of the binder for the bluetooth earphone in FIG. 1A.
FIGs. 1C and 1D are schematic views of binders for bluetooth earphones according to another two embodiments of the disclosure.
FIG. 2 is a schematic view of the binder for the bluetooth earphone in FIG. 1A combined with glasses.
FIG. 3 is a schematic view of the binder for the bluetooth earphone in FIG. 2 further combined with a bluetooth earphone.
FIG. 4 is a schematic view of a binder for a bluetooth earphone according to another embodiment of the disclosure.
FIG. 5 is a schematic view of the binder for the bluetooth earphone in FIG. 4 combined with glasses.
FIG. 6 is a schematic view of the binder for the bluetooth earphone in FIG. 5 further combined with a bluetooth earphone.
FIG. 7 is a schematic view of a binder for a bluetooth earphone according to yet another embodiment of the disclosure.
FIG. 8 is a schematic exploded view of the binder for the bluetooth earphone in FIG. 7.
FIG. 9 is a schematic cross-sectional view of the binder for the bluetooth earphone in FIG. 7.
FIG. 10 is a schematic view of a binder for a bluetooth earphone according to still another embodiment of the disclosure.
FIG. 11 is a schematic view of a combination of the binder for the bluetooth earphone in FIG. 10 and the bluetooth earphone.
FIG. 12 is a schematic view of the binder for the bluetooth earphone in FIG. 10 combined with two bluetooth earphones.
FIG. 13 is a schematic view of a binder for a bluetooth earphone according to yet another embodiment of the disclosure.

### DETAILED DESCRIPTION OF DISCLOSED EMBODIMENTS

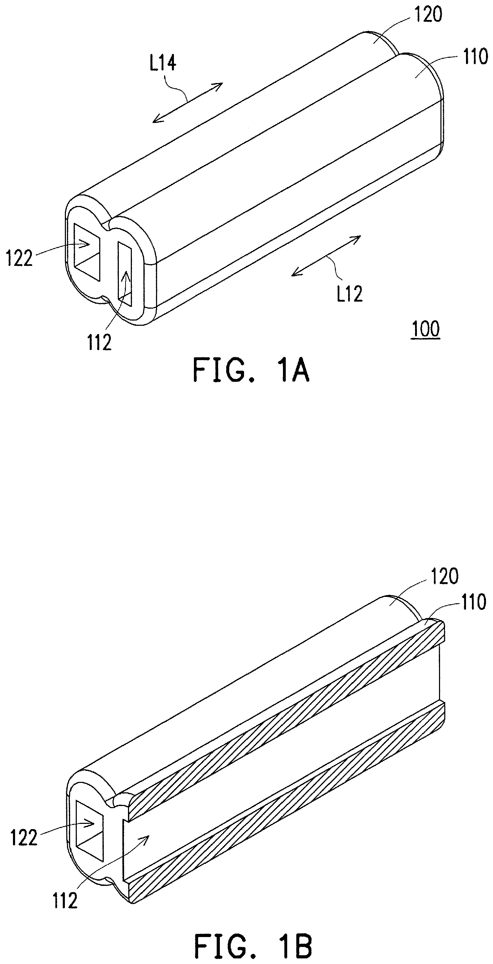

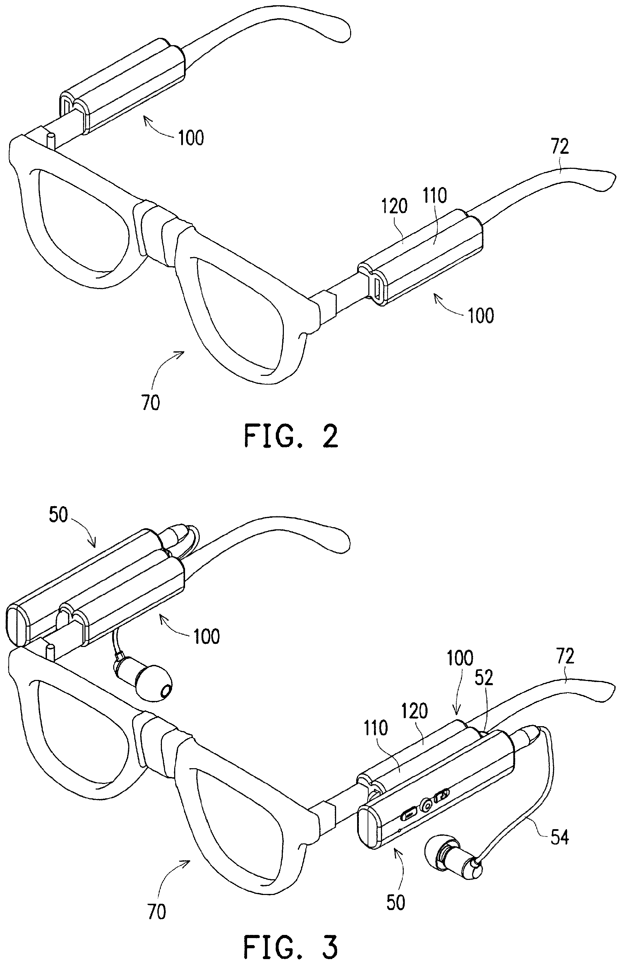

FIG. 1A is a schematic view of a binder for a bluetooth earphone according to an embodiment of the disclosure. FIG. 2 is a schematic view of the binder for the bluetooth earphone in FIG. 1A combined with glasses. FIG. 3 is a schematic view of the binder for the bluetooth earphone in FIG. 2 further combined with a bluetooth earphone. Referring to FIGs. 1A to 3, a binder 100 for a bluetooth earphone in this embodiment has a first sleeve part 110 and a second sleeve part 120 connected to each other. The first sleeve part 110 is configured to cover at least a part of a bluetooth earphone 50. The second sleeve part 120 is configured to cover at least a part of an article 70.

In the binder 100 for the bluetooth earphone in this embodiment, the bluetooth earphone 50 covered by the first sleeve part 110 may be combined with the article 70 covered by the second sleeve part 120 through the first sleeve part 110 and the second sleeve part 120 connected to each other. Therefore, a combination of the bluetooth earphone 50 and the article 70 may be easily achieved. Optionally, when the article 70 is worn on a body of a user, wearing of the bluetooth earphone 50 is also completed, which is stable and convenient.

In this embodiment, the bluetooth earphone 50 may be a bluetooth earphone, a frequency modulation (FM) earphone, an earphone of 2.4G Hz, or other earphones of wireless transmission. The first sleeve part 110 is configured to cover an earphone clip rod 52 of the bluetooth earphone 50. The earphone clip rod 52 is a rod connected to a body of the bluetooth earphone 50, which is similar to a common clip rod on a pen cap. As long as the first sleeve part 110 covers the earphone clip rod 52, a combination of the binder 100 for the bluetooth earphone and the bluetooth earphone 50 may be completed.

In this embodiment, the article 70 is a pair of glasses. The second sleeve part 120 is configured to cover a temple 72 of the glasses 70. In this way, the combination of the bluetooth earphone 50 and the glasses 70 may be easily completed. When the glasses 70 are worn on the body of the user, the wearing of the bluetooth earphone 50 is also completed, which is stable and convenient. In addition, according to preferences of the user, the binder 100 for the bluetooth earphone may also be used on the two temples 72 of the glasses 70 to be combined with one bluetooth earphone 50 respectively.

In this embodiment, the matching bluetooth earphone 50 is externally connected to an in-ear earphone 54. At the same time, the bluetooth earphone 50 may also have a built-in speaker to directly broadcast the sound without being externally connected to the in-ear earphone 54.

In this embodiment, an aperture 112 of the first sleeve part 110 is different from an aperture 122 of the second sleeve part 120. The aperture 112 of the first sleeve part 110 is determined according to a size of a part of the bluetooth earphone 50 to be covered, and the aperture 122 of the second sleeve part 120 is determined according to a size of a part of the article 70 to be covered. Similarly, a length of the first sleeve part 110 may also be different from a length of the second sleeve part 1 20. When selling, the binder 100 for the bluetooth earphone of various sizes may be provided, so that the user may use it with the bluetooth earphones 50 and article 70 of various sizes. Materials of the first sleeve part 110 and the second sleeve part 120 may be soft or hard, such as metal, plastic, silicone, or other suitable materials.

In this embodiment, the first sleeve part 110 and the second sleeve part 120 are integrally formed, and a longitudinal direction L12 of the first sleeve part 110 is parallel to a longitudinal direction L14 of the second sleeve part 120. However, the disclosure is not limited thereto.

FIG. 1B is a cross-sectional view of the binder for the bluetooth earphone in FIG. 1A. according to FIG. 1B, the aperture 112 of the binder 100 for the bluetooth earphone in this embodiment is fixed, but the disclosure is not limited thereto.

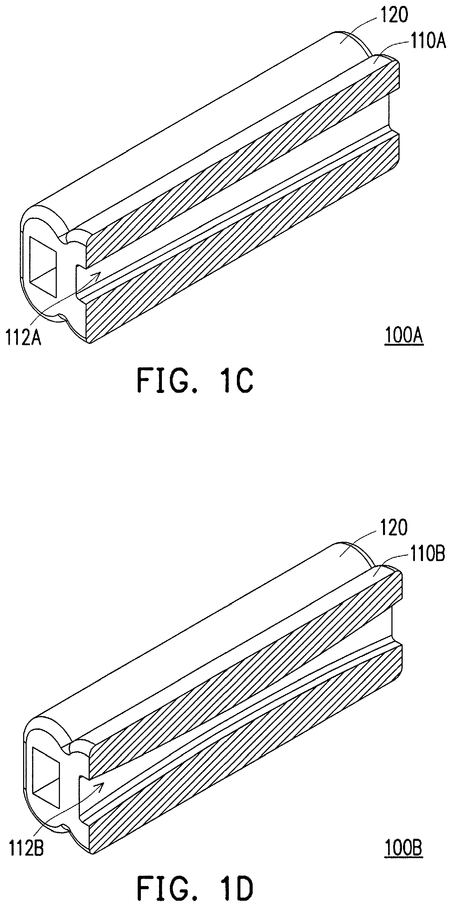

FIGs. 1C and 1D are schematic views of binders for bluetooth earphones according to another two embodiments of the disclosure. Referring to FIGs. 1C and 1D, main technical solutions of binders 100A and 100B for bluetooth earphones in the two embodiments are similar to the binder 100 for the bluetooth earphone in FIG. 1A. Here, differences are mainly described. In addition, various additional technical solutions in the embodiment of FIG. 1A that do not conflict when applied to this embodiment may also be applied to this embodiment. An aperture 112A of the binder 100A for the bluetooth earphone in FIG. 1C gradually changes from one side to the other side in the same manner. That is, the aperture 112A is the largest on one side and the smallest on the other side. An aperture 112B of the binder 100B for the bluetooth earphone in FIG. 1D gradually decreases from two sides to the middle, that is, the aperture 112B is the largest at the two sides and the smallest in the middle.

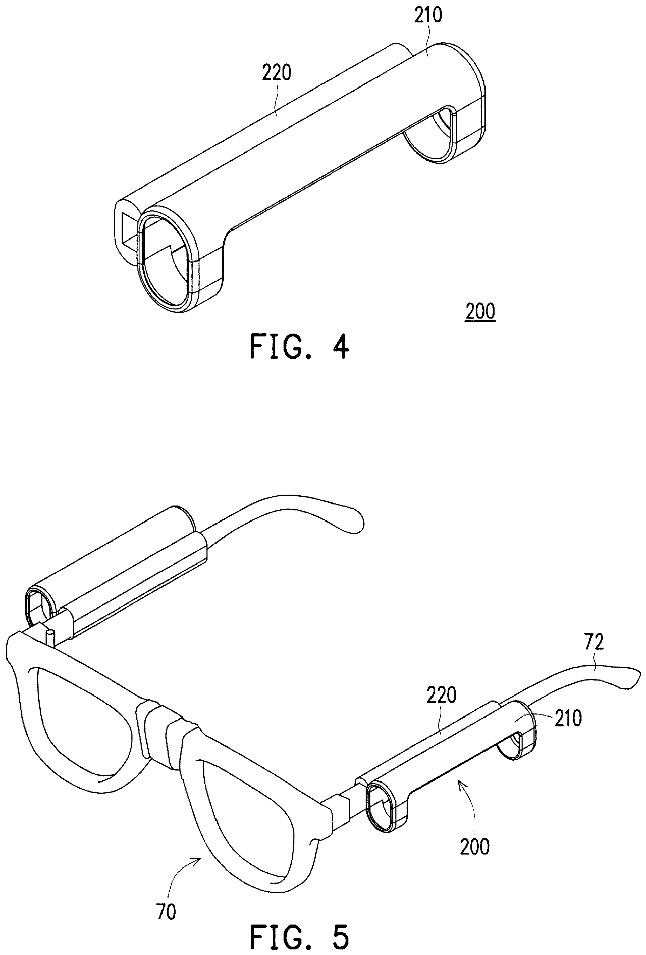

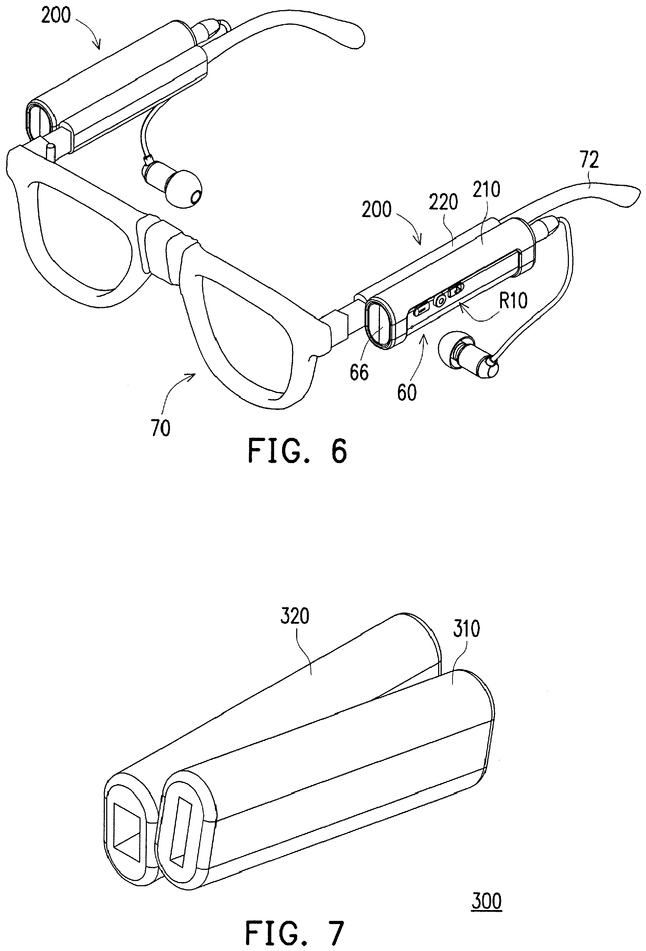

FIG. 4 is a schematic view of a binder for a bluetooth earphone according to another embodiment of the disclosure. FIG. 5 is a schematic view of the binder for the bluetooth earphone in FIG. 4 combined with glasses. FIG. 6 is a schematic view of the binder for the bluetooth earphone in FIG. 5 further combined with a bluetooth earphone. Referring to FIGs. 4 to 6, a main technical solution of a binder 200 for a bluetooth earphone in this embodiment is similar to that of the binder 100 for the bluetooth earphone in FIG. 1A. Here, differences are mainly described. In addition, the various additional technical solutions in the embodiment of FIG. 1A that do not conflict when applied to this embodiment may also be applied to this embodiment. A first sleeve part 210 of the binder 200 for the bluetooth earphone in this embodiment is configured to cover a body 66 of a bluetooth earphone 60. The bluetooth earphone 60 used with the binder 100 for the bluetooth earphone in this embodiment does not have an earphone clip rod. Therefore, the first sleeve part 210 directly covers the body 66 of the bluetooth earphone 60. A second sleeve part 220 of the binder 200 for the bluetooth earphone is configured to cover the temple 72 of the glasses 70. When the glasses 70 are worn on the body of the user, wearing of the bluetooth earphone 60 is also completed, which is stable and convenient.

In this embodiment, the first sleeve part 210 exposes an operation region R10 of the bluetooth earphone 60. In this way, it is convenient for the user to operate the bluetooth earphone 60. The operation region R10 is, for example, provided with a physical button or a touch region. Of course, the first sleeve part 210 may also cover the operation region R10 of the bluetooth earphone 60, as long as the user may still operate the operation region R10 through the first sleeve part 210.

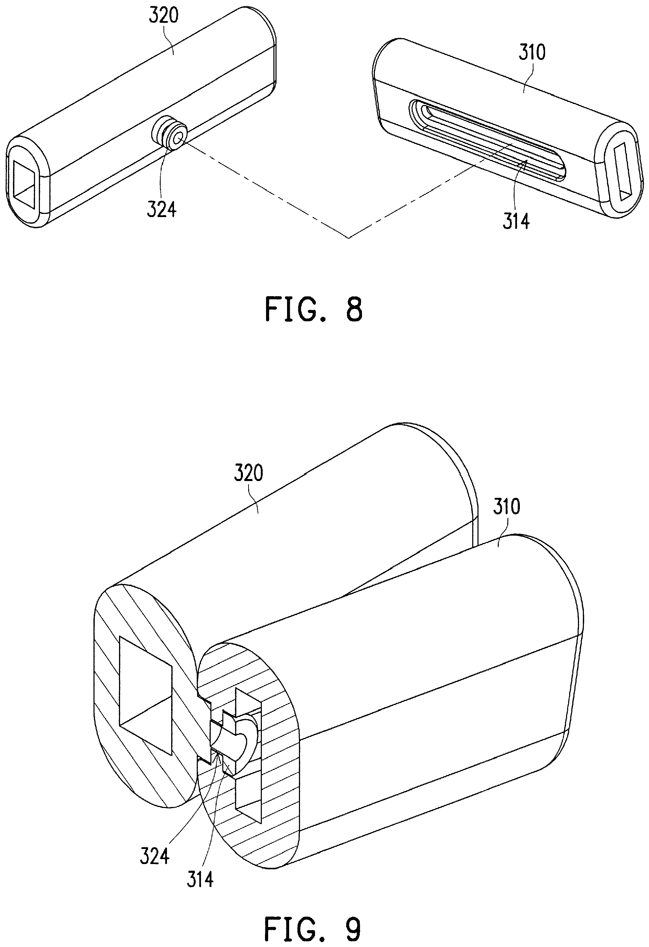

FIG. 7 is a schematic view of a binder for a bluetooth earphone according to yet another embodiment of the disclosure. FIG. 8 is a schematic exploded view of the binder for the bluetooth earphone in FIG. 7. FIG. 9 is a schematic cross-sectional view of the binder for the bluetooth earphone in FIG. 7. Referring to FIGs. 7 to 9, a main technical solution of a binder 300 for a bluetooth earphone in this embodiment is similar to that of the binder 100 for the bluetooth earphone in FIG. 1A. Here, differences are mainly described. In addition, the various additional technical solutions in the embodiment of FIG. 1A that do not conflict when applied to this embodiment may also be applied to this embodiment. A first sleeve part 310 and a second sleeve part 320 of the binder 300 for the bluetooth earphone in this embodiment are combined with each other, and the first sleeve part 310 may move and rotate relative to the second sleeve part 320. For example, the first sleeve part 310 has a guide groove 314, and the second sleeve part 320 has a tenon 324. The tenon 324 is suitable for being locked in the guide groove 314 and may move along the guide groove 314. In addition, when a width of the guide groove 314 is designed to be greater than a width of the tenon 324 and a combined part thereof, the tenon 324 may also rotate relative to the guiding guide 314.

Therefore, when the binder 300 for the bluetooth earphone in this embodiment replaces the binder 100 for the bluetooth earphone in FIG. 3, the bluetooth earphone 50 may move and rotate relative to the temple 72 of the glasses 70. In this way, the user may adjust a position of the bluetooth earphone 50 to obtain the best listening effect.

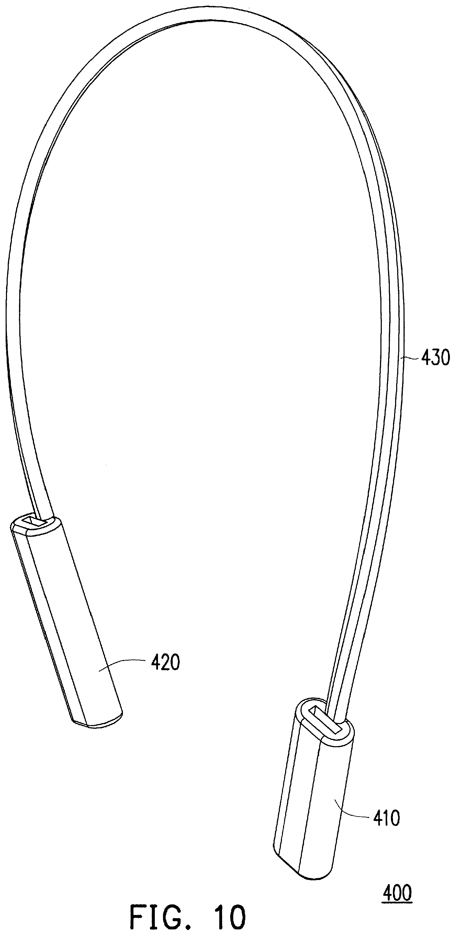

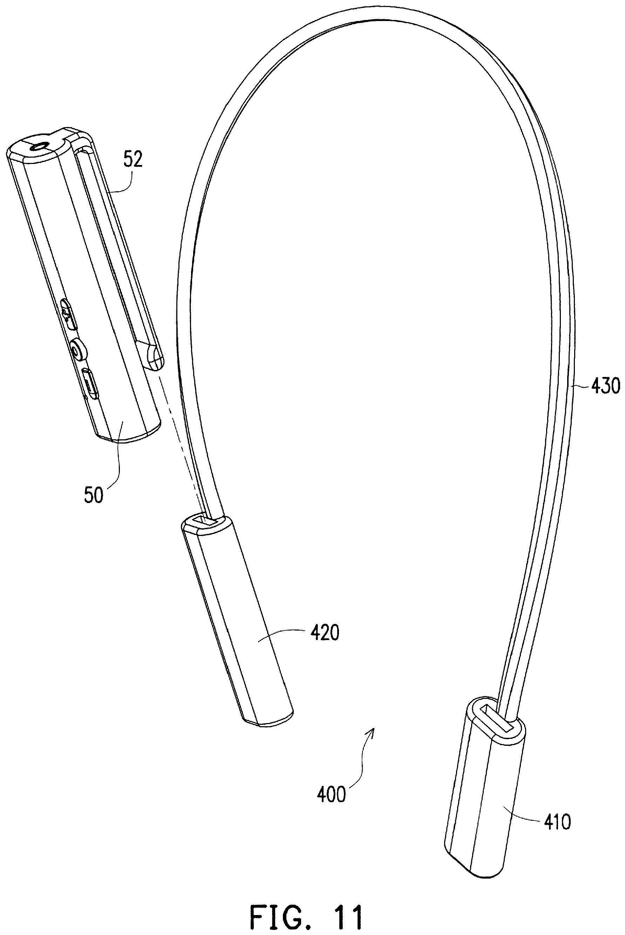

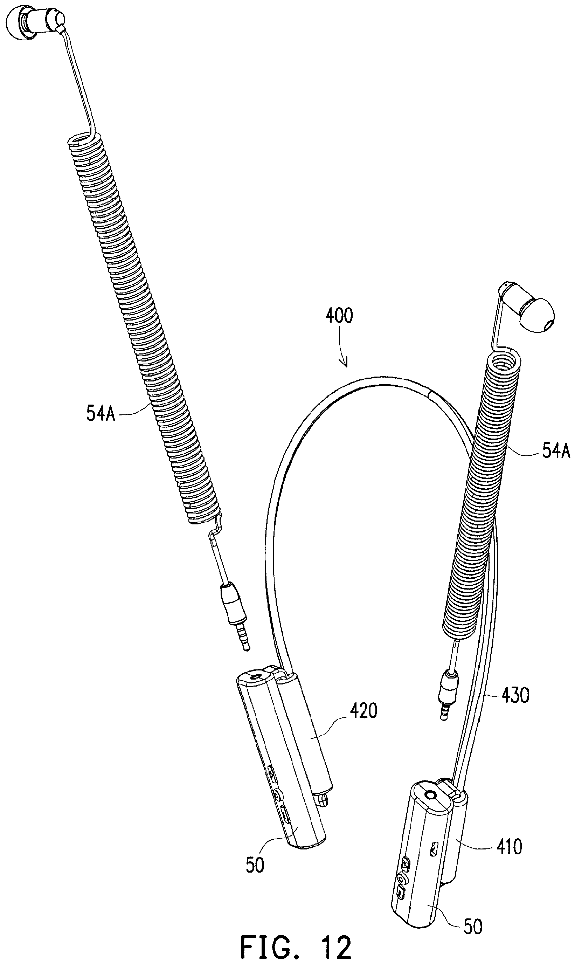

FIG. 10 s a schematic view of a binder for a bluetooth earphone according to still another embodiment of the disclosure. FIG. 11 is a schematic view of a combination of the binder for the bluetooth earphone in FIG. 10 and the bluetooth earphone. FIG. 12 is a schematic view of the binder for the bluetooth earphone in FIG. 10 combined with two bluetooth earphones. Referring to FIGs. 10 to 12, a main technical solution of a binder 400 for a bluetooth earphone in this embodiment is similar to that of the binder 100 for the bluetooth earphone in FIG. 1A. Here, differences are mainly described. In addition, the various additional technical solutions in the embodiment of FIG. 1A that do not conflict when applied to this embodiment may also be applied to this embodiment. The binder 400 for the bluetooth earphone in this embodiment further has a nape hanger 430 connected to a first sleeve part 410 and a second sleeve part 420. In this embodiment, an article covered by the second sleeve part 420 is another bluetooth earphone 50. That is, the first sleeve part 410 and the second sleeve part 420 are configured to cover the bluetooth earphones 50 respectively. Moreover, since the binder 400 for the bluetooth earphone has the nape hanger 430, the nape hanger 430 may be hung on a neck of the user, and the two bluetooth earphones 50 are located on two sides to correspond to ears of the user. In addition, an in-ear earphone 54A externally connected to the bluetooth earphone 50 may have a telescopic wire segment, which reduces a difficulty of wire management.

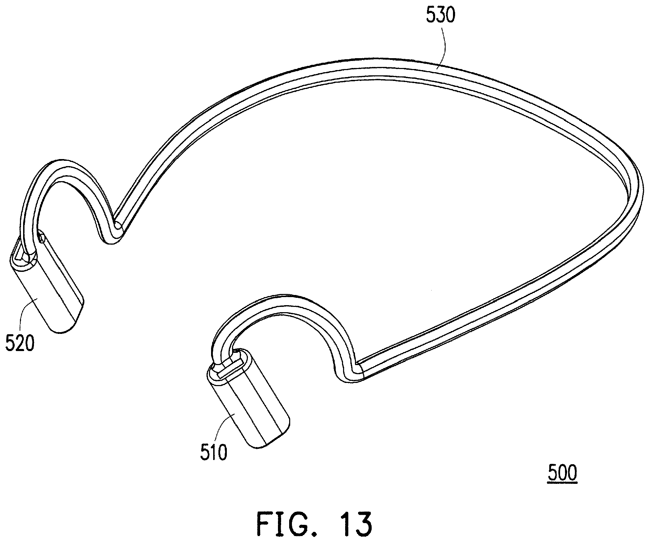

FIG. 13 is a schematic view of a binder for a bluetooth earphone according to yet another embodiment of the disclosure. Referring to FIG. 13, a main technical solution of a binder 500 for a bluetooth earphone in this embodiment is similar to that of the binder 400 for the bluetooth earphone in FIG. 10. Here, differences are mainly described. In addition, various additional technical solutions in the embodiment of FIG. 10 that do not conflict when applied to this embodiment may also be applied to this embodiment. A back-head hanger 530 of the binder 500 for the bluetooth earphone in this embodiment has an arc bend at a place where a first sleeve part 510 and a second sleeve part 520 are connected, and is suitable for bypassing the ears of the user and leaning against on a back of a head of the user.

Based on the above, the binder for the bluetooth earphone in the disclosure may firmly combine the bluetooth earphone to another article. When the article is comfortably worn on the body of the user, the wearing of the bluetooth earphone is also completed, which is stable and convenient.

## Claims

1. A binder (100,200,300,400) for a bluetooth earphone (50, 60), comprising a first sleeve part (110,210,310,410) and a second sleeve part (120,220,320,420) connected to each other, wherein the first sleeve part (110,210,310,410) is configured to cover at least a part of the bluetooth earphone (50, 60), and the second sleeve part (120,220,320,420) is configured to cover at least a part of an article (70).

2. The binder (100,200,300,400) for the bluetooth earphone (50, 60) according to claim 1, wherein the first sleeve part (110,210,310,410) is configured to cover an earphone clip rod (52) of the bluetooth earphone (50, 60).

3. The binder (100,200,300,400) for the bluetooth earphone (50, 60) according to claim 2, wherein the article (70) is a pair of glasses (70), and the second sleeve part (120,220,320,420) is configured to cover a temple (72) of the glasses (70).

4. The binder (100,200,300,400) for the bluetooth earphone (50, 60) according to claim 1, wherein the first sleeve part (110,210,310,410) is configured to cover a body (66) of the bluetooth earphone (50, 60).

5. The binder (100,200,300,400) for the bluetooth earphone (50, 60) according to claim 4, wherein the first sleeve part (110,210,310,410) exposes an operation region (R10) of the bluetooth earphone (50, 60).

6. The binder (100,200,300,400) for the bluetooth earphone (50, 60) according to claim 4, wherein the article (70) is a pair of glasses (70), and the second sleeve part (120,220,320,420) is configured to cover a temple (72) of the glasses (70).

7. The binder (100,200,300,400) for the bluetooth earphone (50, 60) according to claim 1, wherein the first sleeve part (110,210,310,410) and the second sleeve part (120,220,320,420) are integrally formed, and a longitudinal direction (L12, L14) of the first sleeve part (110,210,310,410) is parallel to a longitudinal direction (L12, L14) of the second sleeve part (120,220,320,420).

8. The binder (100,200,300,400) for the bluetooth earphone (50, 60) according to claim 1, wherein the first sleeve part (110,210,310,410) is combined with the second sleeve part (120,220,320,420), and the first sleeve part (110,210,310,410) moves and rotates relative to the second sleeve part (120,220,320,420).

9. The binder (100,200,300,400) for the bluetooth earphone (50, 60) according to claim 1, further comprising a nape hanger (430) connected to the first sleeve part (110,210,310,410) and the second sleeve part (120,220,320,420), wherein the article (70) is another bluetooth earphone (50, 60).

10. The binder (100,200,300,400) for the bluetooth earphone (50, 60) according to claim 1, wherein an aperture (112,122) of the first sleeve part (110,210,310,410) is different from an aperture (112,122) of the second sleeve part (120,220,320,420).

11. The binder (100,200,300,400) for the bluetooth earphone (50, 60) according to claim 1, further comprising a back-head hanger (530) connected to the first sleeve part (1 10,210,310,410) and the second sleeve part (120,220,320,420), wherein the article (70) is another bluetooth earphone (50, 60).
